# EUROPEAN PATENT SPECIFICATION

(11) **EP 2 969 535 B1**
(45) Date of publication and mention of the grant of the patent: **01.01.2020**
(21) Application number: 14712111.5
(22) Date of filing: 04.03.2014
(51) Int. Cl.: B32B 7/00, B32B 7/02, B32B 7/04, B32B 7/06, B32B 25/00, B32B 25/04, B32B 25/08, B32B 25/14, B32B 25/16, B32B 27/00, B32B 27/06, B32B 27/08, B32B 27/28, B32B 27/30, B32B 27/32

(54) **POLYMERIC MULTILAYER FILMS AND METHODS TO MAKE THE SAME**
POLYMERE MEHRSCHICHTIGE FOLIEN UND VERFAHREN ZUR HERSTELLUNG DAVON
FILMS POLYMÈRES MULTICOUCHE ET LEURS PROCÉDÉS DE FABRICATION

(30) Priority: 12.03.2013 US 201361777526 P
(43) Date of publication of application: 20.01.2016
(73) Proprietor: 3M Innovative Properties Company, St. Paul, MN 55133-3427 (US)
(72) Inventor: SLAMA, David F., Saint Paul, Minnesota 55133-3427 (US); ANTILA, Garth V., Saint Paul, Minnesota 55133-3427 (US); FLANAGAN, Steven J., Saint Paul, Minnesota 55133-3427 (US); HANSEN, Brent R., Saint Paul, Minnesota 55133-3427 (US); HANSCHEN, Thomas P., Saint Paul, Minnesota 55133-3427 (US)
(74) Representative: Mathys & Squire
(86) International application number: PCT/US2014/020233
(87) International publication number: WO 2014/158801

(56) References cited:
- EP-A1- 2 517 961
- GB-A- 2 298 817
- US-A- 4 741 941
- US-A- 4 981 544
- US-A- 5 885 677
- US-A1- 2001 006 714
- US-B1- 6 254 711

## Description

### Background

Perforated films are typically used in the personal hygiene field providing a fluid transfer film allowing the fluid to be removed from areas near to the skin and into the absorbent area. Other common applications are in the food packaging industry and more recently acoustics absorption. Perforated films for these applications are usually less than 100 micrometers (0.004 inch)) thick (more typically less than 50 micrometers (0.002 inch) thick) and are made, for example, of olefins, polypropylene, or polyethylene.

Typical processing methods to produce perforated films include; vacuum drawing of film into a perforated panel or roll, use of pressurized fluid to form and puncture the film, needle punching with either cold or hot needles, or lasers to melt holes in the film. These processes, however, tend to have processing limitations such a hole size, hole density, and/or film thickness of film.

Vacuum or pressurized fluid forming of perforated films tends to be limited to relatively thin films (i.e., films less than 100 micrometers thick) due to the forces available to deform and puncture the film. Also materials used in this type of forming process tend to be limited to olefin-based polymers. Another characteristic of this type of process is the creation of a protrusion in the film where the film is stretched until a perforation is created. This protrusion can be an advantage in the case of fluid control where the protrusion can act as a directional flow control feature. However, it can also be a disadvantage in applications where a low pressure drop is desired. The protrusion creates an elongated hole thereby increasing the surface area and increase fluid drag.

Needle punching processes are also largely used for relatively thin films, but film thicknesses up to about 254 micrometers (0.010 inch) are sometimes seen. Limitations with this process tend to include perforation diameter holes per unit area, and protrusions in the film.

Laser perforation processes can provide relatively small holes (i.e., less than 50 micrometers), can perforate a wide range of thicknesses, can create perforations that are planar with the film surfaces (i.e., without the protrusions associated, for example, with needle punching processes). Limitations of laser perforation processes include the types of materials that are suitable for the process, and processing speeds and costs. Laser perforation processes tend to be best suited for processing films from polyethylene terephthalate (PET), polycarbonate (PC), or other higher glass transition temperature materials. Lasers are often not very effective, for example, in perforating olefin-based materials.

### Summary

In one aspect, the present disclosure describes a polymeric multilayer film having first and second generally opposed major surfaces, adjacent first and second layers that are separable from each other, and an array of indentations extending into the first and second layers. "Separable" refers to the ability of separating or peeling apart of the individual layers. Typically the layers can be separated by manually pulling the layers apart by hand or in production can be pulled apart through web tension and different web paths. The layers can be separated by a peel force of less than 45g/cm. In some embodiments, less than 20 g/cm, or even less than 6 g/cm (in some embodiments, in a range from 0.8 g/cm to 45g/cm, 1.6 g/cm to 20 g/cm, 2 g/cm to 14 g/cm, or even 6 g/cm to 10 g/cm).

The peel force can be measured as follows. Test-strips are cut from the multi layer film with a separable skin layer adhered to the substrate film. The strips are typically about 2.54 cm width, and more than about 15.24 cm in length. Typically, the samples should dwell for more than about 24 hours after production and prior to testing. The leading edge of the separable layer is then partially separated from the substrate film and both film layers are each clamped in a set of tensile grips of a tensile testing machine (available under the trade designation "INSTRON 55" from Norwood, MA). The tensile testing machine is then activated with the tensile grips separating thereby putting tension on the sample at constant speed of about 102 cm/min. (40 in./min.), effectively peeling the separable layer from the adjacent layer of the film at about a 180 degree angle. As the tensile grips move away from each other, the force required to peel the separable layer from the adjacent layer of the film is sensed by the load cell and recorded by a microprocessor. The force required for peel is then averaged over 5 seconds of steady-state travel (preferably ignoring the initial shock of starting the peel) and recorded.

In another aspect, the present disclosure describes a method of a polymeric multilayer film having first and second generally opposed major surfaces, adjacent first and second layers that are separable from each other, and an array of indentations extending into the first and second layers, the method comprising extruding at least first and second (in some embodiments, at least three, four, five, or more) separable polymeric layers into a nip to provide a polymeric multilayer film, wherein the nip comprises a first roll having a structured surface that imparts indentations extending into at least the first and second layers of the polymeric multilayer film.

In another aspect, the present disclosure describes a polymeric multilayer film having first and second generally opposed major surfaces, an array of openings extending between the first and second major surfaces, and at least first and second adjacent layers that are separable from each other, wherein the openings each have a series of areas through the openings from the first and second major surfaces ranging from minimum to maximum areas, and wherein the minimum area is not at at least one of the major surface.

In another aspect, the present disclosure describes a method of making a polymeric multilayer film, the method comprising:
extruding at least two (in some embodiments, at least three, four, five, or more) separable polymeric layers into a nip to provide a polymeric multilayer film, wherein the nip comprises a first roll having a structured surface that imparts indentations through a first major surface of the polymeric multilayer film; and
passing the first major surface having the indentations over a chill roll while applying a heat source to a generally opposed second major surface of the polymeric multilayer film, wherein the application of heat from the heat source results in formation of openings to provide a polymeric multilayer film having first and second generally opposed major surfaces, an array of openings extending between the first and second major surfaces, and at least first and second adjacent layers that are separable from each other, wherein the openings each have a series of areas through the openings from the first and second major surfaces ranging from minimum to maximum areas, and wherein the minimum area is not at at least one of the major surface. Optionally, the method further comprises separating at least the first and second layers of the polymeric multilayer film having openings.

Embodiments of polymeric multilayer film described herein are useful, for example, for filtration and acoustic absorption.

### Brief Description of the Drawings

FIG. 1 is a schematic of exemplary polymeric multilayer film described herein.
FIG. 2 is a schematic of exemplary method for making exemplary polymeric multilayer films described herein.
FIG. 3 is a schematic of another exemplary polymeric multilayer film described herein.
FIG. 4 is a schematic of another exemplary method for making exemplary polymeric multilayer films described herein.
FIG. 4A is a schematic of another exemplary polymeric multilayer film described herein.
FIG. 4B is a schematic of another exemplary polymeric multilayer film described herein.

### Detailed Description

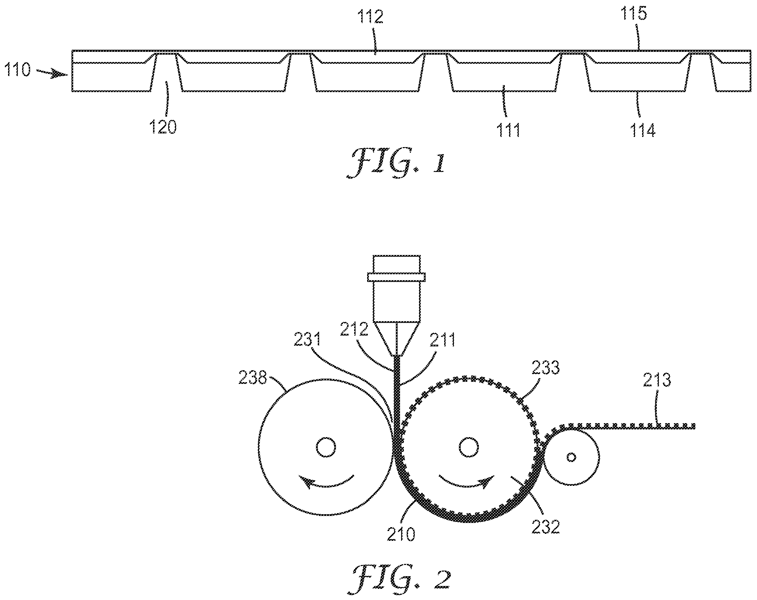

Referring to FIG. 1, exemplary polymeric multilayer film described herein 110 having first and second generally opposed major surfaces 114, 115, adjacent first and second layers 111, 112 that are separable from each other, and an array of indentations 120 extending into first and second layers 111, 112.

Polymeric multilayer films described herein such as shown in FIG. 1 can be made, for example, by methods described herein. For example, referring to FIG. 2, a schematic of an exemplary method is shown. At least first and second separable polymeric layers 211, 212 are extruded into nip 231 to provide polymeric multilayer film 210. Nip 231 comprises first roll 232 having structured surface 233 that imparts indentations 213 extending into first and second layers 211, 212 and roll 238 providing polymeric multilayer film 210.

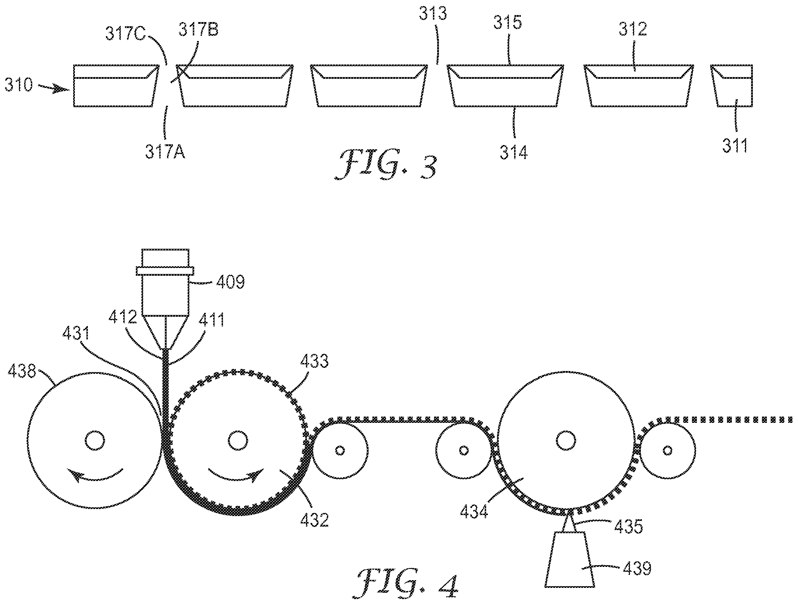

Referring to FIG. 3, exemplary polymeric multilayer film described herein 310 has first and second generally opposed major surfaces 314, 315, array of openings 313 extending between first and second major surfaces 314,315, and at least first and second adjacent layers 311, 312 that are separable from each other. Openings 313 each have a series of areas 317A, 317B, 317C through openings 313 from first and second major surfaces 314, 315 ranging from minimum to maximum areas, wherein the minimum area is not at at least one of the major surfaces 314, 315.

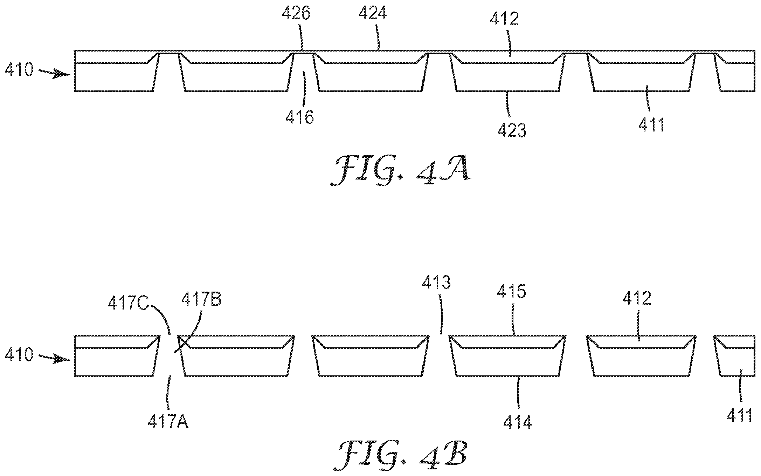

Polymeric multilayer films described herein such as shown in FIG. 3 can be made, for example, by methods described herein. For example, referring to FIGS. 4, 4A, and 4B a schematic of an exemplary method is shown. At least two separable polymeric layers 411, 412 are extruded into nip 431 to provide polymeric multilayer film 410. Nip 431 comprises first roll 432 having structured surface 433 that imparts indentations 416 through first major surface 423 and roll 438 providing polymeric multilayer film 410. First major surface 423 having indentations 416 is passed over chill roll 434 while applying heat source 435 to a generally opposed second major surface 424 of polymeric multilayer film 410. Application of heat from heat source 435 results in formation of openings 413 to provide polymeric multilayer film 410 having first and second generally opposed major surfaces 414, 415, an array of openings 413 extending between the first and second major surfaces 414, 415, and at least first and second adjacent layers 411, 412 that are separable from each other. Openings 413 each have a series of areas 417A, 417B, 417C through openings 413 from first and second major surfaces 414, 415 ranging from minimum to maximum areas, wherein the minimum area is not at at least one of the major surfaces 414, 415. Optionally, at least first and second layers 411, 412 of polymeric multilayer film 410 having openings 413 are separated.

Exemplary polymeric materials for making the polymeric multilayer films include polyamide 6, polyamide 66, polyethyleneterephthalate (PET), copolyester (PETg), cellulose acetobutyrate (CAB), polymethylmethacrylate (PMMA), acrylonitrile butadiene styrene (ABS), , polyolefin copolymers, polyethylene, and polystyrene (PS), ethylene vinyl alcohol (EVOH), polycarbonate (PC), polybutyleneterephthalate (PBT), polyethylenenaphthalate (PEN)and polypropylene.

Examples of suitable material combinations that are separable include: polyethyleneterephthalate (PET) and low density polyethylene (LDPE); polyethyleneterephthalate (PET) and linear low density polyethylene (LLDPE); polyethyleneterephthalate (PET) and medium density polyethylene (MDPE); polyethyleneterephthalate (PET) and high density polyethylene (HDPE); polyethyleneterephthalate (PET) and polypropylene (PP); polyethyleneterephthalate (PET) and polystyrene (PS); polyethyleneterephthalate (PET) and polyamide 6; polyethyleneterephthalate (PET) and polyamide 66; copolyeester (coPETg) and low density polyethylene (LDPE); copolyeester (PETg) and linear low density polyethylene (LLDPE); copolyeester (PETg) and medium density polyethylene (MDPE); copolyester (PETg) and high density polyethylene (HDPE); copolyester (PETg) and polypropylene (PP); copolyester (PETg) and polystyrene (PS); copolyester (PETg) and polyamide 6; copolyester (PETg) and polyamide 66; ethylene vinyl alcohol (EVOH) and low density polyethylene (LDPE); ethylene vinyl alcohol (EVOH) and linear low density polyethylene (LLDPE); ethylene vinyl alcohol (EVOH) and medium density polyethylene (MDPE); ethylene vinyl alcohol (EVOH) and high density polyethylene (HDPE); ethylene vinyl alcohol (EVOH) and polypropylene (PP); ethylene vinyl alcohol (EVOH) and polystyrene (PS); polyamide 6 and linear low density polyethylene (LLDPE); polyamide 6 and low density polyethylene (LDPE); polyamide 6 and medium density polyethylene (MDPE); polyamide 6 and high density polyethylene (HDPE); polyamide 6 and polystyrene (PS); polyamide 66 and linear low density polyethylene (LLDPE); polyamide 66 and low density polyethylene (LDPE); polyamide 66 and medium density polyethylene (MDPE); polyamide 66 and high density polyethylene (HDPE); polyamide 66 and polystyrene (PS); linear low density polyethylene (LLDPE) and polypropylene (PP); low density polyethylene (LDPE) and polypropylene (PP); medium density polyethylene (MDPE) and polypropylene (PP); high density polyethylene (HDPE) and polypropylene (PP); acrylonitrile butadiene styrene (ABS) and linear low density polyethylene (LLDPE); acrylonitrile butadiene styrene (ABS) and low density polyethylene (LDPE); acrylonitrile butadiene styrene (ABS) and medium density polyethylene (MDPE); acrylonitrile butadiene styrene (ABS) and high density polyethylene (HDPE); acrylonitrile butadiene styrene (ABS) and polypropylene (PP); polycarbonate (PC) and linear low density polyethylene (LLDPE); polycarbonate (PC) and low density polyethylene (LDPE); polycarbonate (PC) and medium density polyethylene (MDPE); polycarbonate (PC) and high density polyethylene (HDPE); polycarbonate (PC) and polypropylene (PP); polybutyleneterephthalate (PBT) and linear low density polyethylene (LLDPE); polybutyleneterephthalate (PBT) and low density polyethylene (LDPE); polybutyleneterephthalate (PBT) and medium density polyethylene (MDPE); polybutyleneterephthalate (PBT) and high density polyethylene (HDPE); polybutyleneterephthalate (PBT) and polypropylene (PP); polymethylmethacrylate (PMMA) and linear low density polyethylene (LLDPE); polymethylmethacrylate (PMMA) and low density polyethylene (LDPE); polymethylmethacrylate (PMMA) and medium density polyethylene (MDPE); polymethylmethacrylate (PMMA) and high density polyethylene (HDPE); polymethylmethacrylate (PMMA) and polypropylene (PP); cellulose acetobutyrate (CAB) and linear low density polyethylene (LLDPE); cellulose acetobutyrate (CAB) and low density polyethylene (LDPE); cellulose acetobutyrate (CAB) and medium density polyethylene (MDPE); cellulose acetobutyrate (CAB) and high density polyethylene (HDPE); and cellulose acetobutyrate (CAB) and polypropylene (PP).

Suitable polypropylene materials include homo polypropylene and modified polypropylene such as block copolymers, impact copolymer, and random copolymers.

In some embodiments, the first layer comprises at least one of polycarbonate, polyamide 6, polyamide 66, polyethyleneterephthalate (PET), copolyesters (PETg), cellulose acetobutyrate (CAB), polymethylmethacrylate (PMMA), acrylonitrile butadiene styrene (ABS), or polybutyleneterephthalate (PBT), and the second layer comprises polyolefin. In some embodiments, the first layer comprises polyethylene and the second layer comprises polypropylene.

Optionally, any of the polymeric materials comprising an article described herein may comprise additives such as inorganic fillers, pigments, slip agents, and flame retardants.

Suitable extrusion apparatuses (including materials for making components of the apparatuses) for making multilayer films described herein should be apparent to those skilled in the art after reviewing the instant disclosure, including the working examples. For examples, the rolls (e.g., 232, 238, 432,438, 434) can made of metals such as steel. In some embodiments the surface of rolls contacting the polymeric material(s) are chrome plated, nickel plated, copper plated, or aluminum. Rolls can be chilled, for example using conventional techniques such as water cooling. Nip force can be provided, for example, by pneumatic cylinders.

Exemplary extrusion speeds include 3-15 m/min. (in some embodiments, in a range from 15-50 m/min., 50-100 m/min., or more). Exemplary extrusion temperatures are in range from 200°C-230°C (in some embodiments, in a range from 230°C-260°C, 260-300°C, or greater).

In some embodiments of polymeric multilayer films described herein have a thickness greater than 125 micrometers, 150 micrometers, 200 micrometers, 250 micrometers, 500 micrometers, 750 micrometers, 1000 micrometers, 1500 micrometers, 2000 micrometers, or even at least 2500 micrometers; in some embodiments, in a range from 125 micrometers to 1500 micrometers, or even 125 micrometers to 2500 micrometers.

The openings may be in any of a variety of shapes, including circles and ovals.

In some embodiments of polymeric multilayer films described herein have at least 30 openings/cm² (in some embodiments, at least 100 openings/cm², 200 openings/cm², 250 openings/cm², 300 openings/cm², 400 openings/cm², 500 openings/cm², 600 openings/cm², 700 openings/cm², 750 openings/cm², 800 openings/cm², 900 openings/cm², 1000 openings/cm², 2000 openings/cm², 3000 openings/cm², or even least 4000 openings/cm²; in some embodiments, in a range from 30 openings/cm² to 200 openings/cm², 200 openings/cm² to 500 openings/cm², or even 500 openings/cm² to 4000 openings/cm²).

In some embodiments of polymeric multilayer films described herein, the openings have a largest dimension of not greater than 100 micrometers (in some embodiments, not greater than 250 micrometers, 500 micrometers, or 1000 micrometers; in some embodiments, in a range from 25 micrometers to 100 micrometers, 100 micrometers to 250 micrometers, 250 micrometers to 500 micrometers, or even 500 micrometers to 1000 micrometers).

In some embodiments of polymeric multilayer films herein having a flow resistance, as determined by the Flow Resistance Test, in a range from 250 rayls to 2150 rayls (in some embodiments, 650 rayls to 2150 rayls, or even 1250 rayls to 2150 rayls). The Flow Resistance Test is generally as described in ASTM Standard: C522-03 (2003) using the following procedure. The film to be tested was cut to a diameter slightly greater than the outer diameter of the flange of the top of the specimen holder which is 100 mm in diameter. The specimens to be tested are held in place with a clamping ring with grease on the flange to limit the porous part of the specimen to the inside diameter of the holder. Grease is also used to prevent the flow of air into the edges of the specimen. The specimen holder is then sealed to the mounting plate and the airflow adjusted to give readable settings on the flow meter and pressure measuring device. The air flow is linear air flow, and is typically in the range from 2-7 mm/sec. The differential pressure, P, the flow rate, U, and the calculated quotient, Flow Resistance, R = P/U are recorded. Five replicates are tested, using a larger airflow rate each time. If the apparent resistance increased in a steady way, the airflow is likely turbulent and the readings are to be discarded. A series of at least three measurements at well separated airflow velocities (25% recommended minimum differential) below the turbulent level are performed. The temperature range of the measurements is in a range from 21°C-23°C. No adjustment is made for the barometric pressure.

Embodiments of polymeric multilayer film described herein are useful, for example, for filtration and acoustic absorption.
1. A polymeric multilayer film having first and second generally opposed major surfaces, adjacent first and second layers that are separable from each other, and an array of indentations extending into the first and second layers.
2. The polymeric multilayer film wherein the first layer comprises at least one of polycarbonate, polyamide 6, polyamide 66, polyethylenephthalate (PET), polyethylenephthalate (PETg), cellulose acetobutyrate (CAB), polymethylmethacrylate (PMMA), acrylonitrile butadiene styrene (ABS), or polybutyleneterephthalate (PBT), and the second layer comprises polyolefin.
3. The polymeric multilayer film wherein the first layer comprises polyethylene and the second layer comprises polypropylene.
4. A method of making the article the method comprising extruding at least first and second separable polymeric layers into a nip to provide a polymeric multilayer film, wherein the nip comprises a first roll having a structured surface that imparts indentations extending into at least the first and second layers of the polymeric multilayer film.
5. A polymeric multilayer film having first and second generally opposed major surfaces, an array of openings extending between the first and second major surfaces, and at least first and second adjacent layers that are separable from each other, wherein the openings each have a series of areas through the openings from the first and second major surfaces ranging from minimum to maximum areas, and wherein the minimum area is not at at least one of the major surface.
6. The polymeric multilayer film wherein the first layer comprises at least one of polycarbonate, polyamide 6, polyamide 66, polyethyleneterephthalate (PET), copolyester (PETg), cellulose acetobutyrate (CAB), polymethylmethacrylate (PMMA), acrylonitrile butadiene styrene (ABS), or polybutyleneterephthalate (PBT), and the second layer comprises polyolefin.
7. The polymeric multilayer film, wherein the polymeric multilayer film has a thickness greater than 125 micrometers (in some embodiments, greater than 150 micrometers, 200 micrometers, 250 micrometers, 500 micrometers, 750 micrometers, 1000 micrometers, 1500 micrometers, 2000 micrometers, or even at least 2500 micrometers; in some embodiments, in a range from 125 micrometers to 1500 micrometers, or even 125 micrometers to 2500 micrometers).
8. The polymeric multilayer film having at least 30 openings/cm² (in some embodiments, at least 100 openings/cm², 200 openings/cm², 250 openings/cm², 300 openings/cm², 400 openings/cm², 500 openings/cm², 600 openings/cm², 700 openings/cm², 750 openings/cm², 800 openings/cm², 900 openings/cm², 1000 openings/cm², 2000 openings/cm², 3000 openings/cm², or even least 4000 openings/cm²; in some embodiments, in a range from 30 openings/cm² to 200 openings/cm², 200 openings/cm² to 500 openings/cm², or even 500 openings/cm² to 4000 openings/cm²).
9. The polymeric multilayer film wherein openings have a largest dimension of not greater than 100 micrometers (in some embodiments, not greater than 250 micrometers, 500 micrometers, or 1000 micrometers; in some embodiments, in a range from 25 micrometers to 100 micrometers, 100 micrometers to 250 micrometers, 250 micrometers to 500 micrometers, or even 500 micrometers to 1000 micrometers).
10. The polymeric multilayer film wherein a flow resistance, as determined by the Flow Resistance Test, in a range from 250 rayls to 2150 rayls (in some embodiments, 650 rayls to 2150 rayls, or even 1250 rayls to 2150 rayls).
11. A method of making a polymeric multilayer film, the method comprising:
   extruding at least two separable polymeric layers into a nip to provide a polymeric multilayer film, wherein the nip comprises a first roll having a structured surface that imparts indentations through a first major surface of the polymeric multilayer film; and
   passing the first major surface having the indentations over a chill roll while applying a heat source to a generally opposed second major surface of the polymeric multilayer film, wherein the application of heat from the heat source results in formation of openings to provide the polymeric multilayer film.
12. The method further comprising separating at least the first and second layers of the polymeric multilayer film having openings.

### Example 1

A perforated multilayer polymeric film was prepared using the following procedures. A three layer polymeric film consisting of layers A, B, and C was prepared using three extruders to feed a 25 cm wide 3 layer multi-manifold die (obtained under the trade designation "CLOEREN" from Cloeren Inc., Orange TX). Layers A and B consisted of the same polymer (hereinafter referred to as layer "AB") and as a result essentially acted as one mono-layer combined with layer C following the extrusion process. The extrusion process was done vertically downward into a nip consisting of a tooling roll (432) and a smooth steel backup roll (438). The extrusion process was configured such that layer AB contacted the tooling roll (432) and layer C contacted the backup roll (438) as shown schematically in FIG. 4. The polymer for layer A was provided with a 6.35 cm single screw extruder. The polymer for layer B was provided with a 6.35 cm single screw extruder. The polymer for layer C was provided with a 3.2 cm single screw extruder. Heating zone temperatures for the three extruders is shown in Table 1, below.

**Table 1**

| Heating Zones | 6.35 cm | 6.35 cm | 3.2cm | Die, °C |
|---|---|---|---|---|
| | (2.5 inch) | (2.5 inch) | (1.25 inch) | |
| | Layer A, °C | Layer B, °C | Layer C, °C | |
| Zone 1 | 260 | 260 | 190 | 300 |
| Zone 2 | 288 | 288 | 204 | 300 |
| Zone 3 | 300 | 300 | 232 | 300 |
| Zone 4 | 300 | 300 | N/A | N/A |
| End cap | 300 | 300 | 232 | N/A |
| Neck Tube | 300 | 300 | 232 | N/A |

The rpms of the extruders are listed in Table 2, below.

**Table 2**

| | 6.35 cm | 6.35 cm | 3.2 cm |
|---|---|---|---|
| | (2.5 inch) | (2.5 inch) | (1.25 inch) |
| | Layer A | Layer B | Layer C |
| Extruder rpm | 13.6 | 15 | 21 |

Layers AB were extruded using a black pigmented polyamide resin (obtained under the trade designation "RTP 200 SE BLACK" from RTP Company, Winona, MN). The basis weight for the combined layers AB (411) was 251 g/m². Layer C (412) was extruded using a copolyester resin (obtained under the trade designation "14285 COPETG" from Eastman Chemical Company, Kingsport, TN). The basis weight of layer C (412) was 82 g/m².

The two rolls comprising the nip were water cooled rolls (432, 438) with a nominal 30.5 cm in diameter and 40.6 cm face widths. Nip force was provided by pneumatic cylinders. The smooth steel backup roll (438) temperature set point of 38°C. The tooling roll (432) had male post features (433) cut into the surface of the roll. The male post features were chrome plated. The male features (defined as posts) (433) on the tool surface were flat square topped pyramids with a square base. The top of the posts were 94 micrometers square and the bases were 500 micrometers square. The overall post height was 914 micrometers. The center to center spacing of the posts was 820 micrometers in both the radial and cross roll directions. The tooling roll (432) had a temperature set point of 38 degree Celsius. The tooling roll (432) and backup rolls (438) were directly driven. The nip force between the two nip rolls was 531 Newtons per linear centimeter. The extrudate takeaway line speed was 3.66 m/min.

The polymers for the three layers were extruded from the die (409) directly into the nip (431) between the tooling (432) and backup roll (438). The male features (433) on the tooling roll (432) created indentations (416) in the extrudate. A thin layer of polymer (426) remained between the tooling (432) and backup roll (438). Typically this layer (426) was less than 20 micrometer thick. The extrudate remained on the tooling roll (432) for 180 degrees of wrap to chill and solidify the extrudate into a multi-layer polymeric film. The multi-layer film was then wound into roll form.

The multi-layer polymeric film containing indentations was then converted into a perforated film using the following procedure. A flame perforation system as described in U.S. Pat. No. 7,037,100 (Strobel et. al.), and utilizing the burner design from U.S. Pat. No. 7,635,264 (Strobel et. was used to melt and remove the thin layer (426).

Specific modifications to the equipment and process conditions for this experiment were as follows:
The chill roll (434) was a smooth surface roll without an etched or engraved pattern.
The burner (439) was a 30 .5 centimeter (12 inch) six port burner, anti howling design as described in U.S. Pat. No.7,635,264 (Strobel et. al.), the disclosure of which is incorporated by reference, and was obtained from Flynn Burner Corporation, New Rochelle, NY.
Unwind Tension: 178 Newton total tension
Winder Tension: 178 Newton total tension
Burner (439) BTU's: 5118 BTU/cm/hour
1% excess oxygen
Gap between burner (439) and the film surface: 12 mm
Line Speed: 30 m/min.
Chill roll cooling water set point: 15.5°C

The multilayer polymeric film was processed through the apparatus schematically shown in FIG. 4 at the above conditions. The web orientation was such that the side of the film (424) with the thin polymer layer (426) was closest to the burner (439) and opposite of the chill roll (434). The chill roll (434) cooled the main body of the film, keeping the majority of the film below the softening point of the polymer. Heat from the burner flame (435) caused the remaining thin polymer layer (426) to melt thereby creating the perforations (413) in the film..Layer C was then separated from layer AB and was wound into a roll as was layer AB.

### Example 2

A multi-layer polymeric film was extruded as in Example 1 using the temperature set points shown in Table 3, below.

**Table 3**

| Heating Zones | 6.35 cm | 6.35 cm | 3.2 cm | Die, °C |
|---|---|---|---|---|
| | (2.5 inch) | (2.5 inch) | (1.25 inch) | |
| | Layer A, °C | Layer B, °C | Layer C, °C | |
| Zone 1 | 260 | 260 | 232 | 316 |
| Zone 2 | 288 | 288 | 260 | 316 |
| Zone 3 | 316 | 316 | 288 | 316 |
| Zone 4 | 316 | 316 | N/A | N/A |
| End cap | 316 | 316 | 288 | N/A |
| Neck Tube | 316 | 316 | 288 | N/A |

The rpms of the extruders are listed in Table 4, below.

**Table 4**

| | 6.35 cm | 6.35 cm | 3.2 cm |
|---|---|---|---|
| | (2.5 inch) | (2.5 inch) | (1.25 inch) |
| | Layer A | Layer B | Layer C |
| Extruder rpm | 4.9 | 5 | 44 |

Layers AB were extruded using a black pigmented polycarbonate resin ("RTP 300 HR FR BLACK"). The basis weight for the combined layers AB (411) was 239 g/m². Layer C (412) was extruded using a 50/50 by weight blend of random copolymer polypropylene and medium density polyethylene resin (obtained under the trade designation "POLYBATCH DUL 3636 DP12" from A. Schulman Company, Akron, OH). The basis weight of layer C (412) was 69 g/m².

The three layer ABC extrudate was extruded using the same nip roll configuration and process parameters as in Example 1. The multi-layer polymeric film containing indentations was then converted into a perforated film using the same procedure and process parameters as in Example 1. Layer C was then separated from layer AB and was wound into a roll as was layer AB.

## Claims

1. A polymeric multilayer film having first and second opposed major surfaces, adjacent first and second layers that are separable from each other, and an array of indentations extending into the first and second layers.

2. The polymeric multilayer film of claim 1, wherein the first layer comprises at least one of polycarbonate, polyamide 6, polyamide 66, polyethyleneterephthalate, polyethylenenaphthalate, cellulose acetobutyrate, polymethylmethacrylate, acrylonitrile butadiene styrene, or polybutyleneterephthalate, and the second layer comprises polyolefin.

3. The polymeric multilayer film of claim 1, wherein the first layer comprises polyethylene and the second layer comprises polypropylene.

4. A method of making the article of any preceding claim, the method comprising extruding at least first and second separable polymeric layers into a nip to provide a polymeric multilayer film, wherein the nip comprises a first roll having a structured surface that imparts indentations extending into at least the first and second layers of the polymeric multilayer film.

5. A polymeric multilayer film having first and second opposed major surfaces, an array of openings extending between the first and second major surfaces, and at least first and second adjacent layers that are separable from each other, wherein the openings each have a series of areas through the openings from the first and second major surfaces ranging from minimum to maximum areas, and wherein the minimum area is not at at least one of the major surface.

6. The polymeric multilayer film of claim 5, wherein the first layer comprises at least one of polycarbonate, polyamide 6, polyamide 66, polyethyleneterephthalate, polyethylenenaphthalate, cellulose acetobutyrate, polymethylmethacrylate acrylonitrile butadiene styrene, or polybutyleneterephthalate, and the second layer comprises polyolefin.

7. The polymeric multilayer film of either claim 5 or 6, wherein the polymeric multilayer film has a thickness greater than 125 micrometers.

8. The polymeric multilayer film of any of claims 5 to 7 having at least 30 openings/cm2.

9. The polymeric multilayer film of any of claims 5 to 8, wherein openings have a largest dimension of not greater than 100 micrometers.

10. The polymeric multilayer film of any of claims 5 to 9, having a flow resistance, as determined by the Flow Resistance Test described in the Detailed Description, in a range from 250 rayls to 2150 rayls.

11. A method of making a polymeric multilayer film, the method comprising:
extruding at least two separable polymeric layers into a nip to provide a polymeric multilayer film, wherein the nip comprises a first roll having a structured surface that imparts indentations through a first major surface of the polymeric multilayer film; and
passing the first major surface having the indentations over a chill roll while applying a heat source to a opposed second major surface of the polymeric multilayer film, wherein the application of heat from the heat source results in formation of openings to provide the polymeric multilayer film of any of claims 5 to 10.

12. The method claim 11 further comprising separating at least the first and second layers of the polymeric multilayer film having openings.

## Patentansprüche

1. Eine mehrschichtige Polymerfolie mit ersten und zweiten gegenüberliegenden Hauptoberflächen, die angrenzend an die ersten und zweiten Schichten voneinander trennbar sind, und einer Anordnung von Vertiefungen, die sich in die ersten und zweiten Schichten erstrecken.

2. Die mehrschichtige Polymerfolie nach Anspruch 1, wobei die erste Schicht mindestens eines von Polycarbonat, Polyamid 6, Polyamid 66, Polyethylenterephthalat, Polyethylennaphthalat, Celluloseacetobutyrat, Polymethylmethacrylat, Acrylnitril-Butadien-Styrol oder Polybutylenterephthalat umfasst, und die zweite Schicht Polyolefin umfasst.

3. Die mehrschichtige Polymerfolie nach Anspruch 1, wobei die erste Schicht Polyethylen umfasst und die zweite Schicht Polypropylen umfasst.

4. Ein Verfahren zum Herstellen des Artikels nach einem der vorhergehenden Ansprüche, wobei das Verfahren das Extrudieren von mindestens ersten und zweiten trennbaren Polymerschichten in einen Spalt umfasst, um eine mehrschichtige Polymerfolie bereitzustellen, wobei der Spalt eine erste Walze mit einer strukturierten Oberfläche umfasst, die Vertiefungen verleiht, die sich in mindestens die erste und die zweite Schicht der mehrschichtigen Polymerfolie erstrecken.

5. Eine mehrschichtige Polymerfolie mit ersten und zweiten gegenüberliegenden Hauptoberflächen, einer Anordnung von Öffnungen, die sich zwischen der ersten und der zweiten Hauptoberfläche erstrecken, und mindestens ersten und zweiten benachbarten Schichten, die voneinander trennbar sind, wobei die Öffnungen jeweils eine Folge von Flächen durch die Öffnungen von der ersten und zweiten Hauptoberfläche im Bereich von minimalen zu maximalen Flächen sind, und wobei die minimale Fläche nicht an mindestens einer der Hauptoberflächen ist.

6. Die mehrschichtige Polymerfolie nach Anspruch 5, wobei die erste Schicht mindestens eines von Polycarbonat, Polyamid 6, Polyamid 66, Polyethylenterephthalat, Polyethylennaphthalat, Celluloseacetobutyrat, Polymethylmethacrylat Acrylonitril-Butadien-Styrol oder Polybutylenterephthalat umfasst, und die zweite Schicht Polyolefin umfasst.

7. Die mehrschichtige Polymerfolie nach einem von Anspruch 5 oder 6, wobei die mehrschichtige Polymerfolie eine Dicke von mehr als 125 Mikrometer aufweist.

8. Die mehrschichtige Polymerfolie nach einem der Ansprüche 5 bis 7 mit mindestens 30 Öffnungen pro cm².

9. Die mehrschichtige Polymerfolie nach einem der Ansprüche 5 bis 8, wobei die Öffnungen eine größte Abmessung von nicht mehr als 100 Mikrometern aufweisen.

10. Die mehrschichtige Polymerfolie nach einem der Ansprüche 5 bis 9, die einen Flusswiderstand in einem Bereich von 250 Rayl bis 2150 Rayl aufweist, wie durch den in der detaillierten Beschreibung beschriebenen Flusswiderstandstest bestimmt.

11. Ein Verfahren zum Herstellen einer mehrschichtigen Polymerfolie, wobei das Verfahren umfasst:
Extrudieren von mindestens zwei trennbaren Polymerschichten in einen Spalt, um eine mehrschichtige Polymerfolie bereitzustellen, wobei der Spalt eine erste Walze mit einer strukturierten Oberfläche umfasst, die Vertiefungen durch eine erste Hauptoberfläche der mehrschichtigen Polymerfolie verleiht; und
Führen der ersten Hauptoberfläche mit den Vertiefungen über eine Kühlwalze, während eine Wärmequelle auf eine gegenüberliegende zweite Hauptoberfläche der mehrschichtigen Polymerfolie angewendet wird, wobei die Anwendung von Wärme von der Wärmequelle zur Bildung von Öffnungen führt, um die mehrschichtige Polymerfolie nach einem der Ansprüche 5 bis 10 bereitzustellen.

12. Das Verfahren nach Anspruch 11, ferner umfassend das Trennen von mindestens der ersten und der zweiten Schicht der mehrschichtigen Polymerfolie, die Öffnungen aufweist.

## Revendications

1. Film multicouche polymère ayant des première et deuxième surfaces principales opposées, des première et deuxième couches adjacentes qui sont séparables l'une de l'autre, et un réseau de renfoncements s'étendant dans les première et deuxième couches.

2. Film multicouche polymère selon la revendication 1, dans lequel la première couche comprend au moins l'un du polycarbonate, du polyamide 6, du polyamide 66, du téréphtalate de polyéthylène, du naphtalate de polyéthylène, de l'acétobutyrate de cellulose, du polyméthacrylate de méthyle, de l'acrylonitrile butadiène styrène, ou du polytéréphtalate de butylène, et la deuxième couche comprend de la polyoléfine.

3. Film multicouche polymère selon la revendication 1, dans lequel la première couche comprend du polyéthylène et la deuxième couche comprend du polypropylène.

4. Procédé de fabrication de l'article selon l'une quelconque des revendications précédentes, le procédé comprenant l'extrusion d'au moins des première et deuxième couches polymères séparables dans une ligne de contact pour fournir un film multicouche polymère, dans lequel la ligne de contact comprend un premier rouleau ayant une surface structurée qui confère des renfoncements s'étendant dans au moins les première et deuxième couches du film multicouche polymère.

5. Film multicouche polymère ayant des première et deuxième surfaces principales opposées, un réseau d'ouvertures s'étendant entre les première et deuxième surfaces principales, et au moins des première et deuxième couches adjacentes qui sont séparables l'une de l'autre, dans lequel les ouvertures ont chacune une série d'aires à travers les ouvertures des première et deuxième surfaces principales allant d'une aire minimale à une aire maximale, et dans lequel l'aire minimale n'est pas au niveau d'au moins une des surface principale.

6. Film multicouche polymère selon la revendication 5, dans lequel la première couche comprend au moins l'un du polycarbonate, du polyamide 6, du polyamide 66, du téréphtalate de polyéthylène, du naphtalate de polyéthylène, de l'acétobutyrate de cellulose, du polyméthacrylate de méthyle acrylonitrile butadiène styrène, ou du polytéréphtalate de butylène, et la deuxième couche comprend de la polyoléfine.

7. Film multicouche polymère selon la revendication 5 ou 6, dans lequel le film multicouche polymère a une épaisseur supérieure à 125 micromètres.

8. Film multicouche polymère selon l'une quelconque des revendications 5 à 7 ayant au moins 30 ouvertures/cm².

9. Film multicouche polymère selon l'une quelconque des revendications 5 à 8, dans lequel les ouvertures ont une dimension la plus grande ne dépassant pas 100 micromètres.

10. Film multicouche polymère selon l'une quelconque des revendications 5 à 9, ayant une résistance à l'écoulement, telle que déterminée par le Test de résistance à l'écoulement décrit dans la Description détaillée, dans un intervalle allant de 250 rayls à 2 150 rayls.

11. Procédé de fabrication d'un film multicouche polymère, le procédé comprenant :
l'extrusion d'au moins deux couches polymères séparables dans une ligne de contact pour fournir un film multicouche polymère, dans lequel la ligne de contact comprend un premier rouleau ayant une surface structurée qui confère des renfoncements à travers une première surface principale du film multicouche polymère ; et
le passage de la première surface principale ayant les renfoncements par-dessus un rouleau refroidisseur tout en appliquant une source de chaleur à une deuxième surface principale opposée du film multicouche polymère, dans lequel l'application de chaleur à partir de la source de chaleur entraîne la formation d'ouvertures pour fournir le film multicouche polymère selon l'une quelconque des revendications 5 à 10.

12. Procédé selon la revendication 11 comprenant en outre la séparation d'au moins les première et deuxième couches du film multicouche polymère ayant des ouvertures.
